# EUROPEAN PATENT APPLICATION

(11) **EP 4 144 967 A1**
(43) Date of publication of application: **08.03.2023**
(21) Application number: 22187387.0
(22) Date of filing: 28.07.2022
(51) Int. Cl.: F01N 3/28

(54) **METAL HONEYCOMB SUBSTRATE**

(30) Priority: 15.09.2021 TW 110210918 U; 05.09.2021 TW 110210919 U
(71) Applicant: Sentec E&E Co., Ltd., Taoyuan City 325 (TW)
(72) Inventor: HE, Hung-Chang, 325027 Taoyuan City (TW); HAN, Pei-Hua, 325027 Taoyuan City (TW)
(74) Representative: Kuhnen & Wacker Patent- und Rechtsanwaltsbüro PartG mbB

(57) **Abstract**

A metal honeycomb substrate (100) includes a tubular body (10), a flat plate (20), and a wavy plate (30). The tubular body (10) has a receiving portion (11). The wavy plate (30) is stacked with the flat plate (20) to form a spiral structure (S) received in the receiving portion (11). The wavy plate (30) has a wavy-shaped cross section and includes a second region (31) and a continuous region (32) connected to the second region (31). The wavy-shaped cross section includes peak portions (30a) and valley portions (30b). The wavy plate (30) has a solder region (33) overlapping at least one portion of at least one of the second region (31) and the continuous region (32). Solders (T) are on outer sides of the peak portions (30a) and outer sides of the valley portions (30b) which are in the solder region (33). A ratio of an area of the solder region (33) to an area of the wavy plate (30) is in a range between substantially 20% and substantially 66%.

## Description

### BACKGROUND

### Technical Field

The instant disclosure relates to a metal honeycomb substrate, in particular, to a metal honeycomb substrate adapted to be applied in the exhaust pipe of a transportation vehicle.

### Related Art

Exhaust gases are generated during operations of fuel engines of transportation vehicles. As a result, a catalytic converter for cleaning the exhaust gases is installed in the exhaust pipe of a transportation. The catalytic converter is formed by applying catalysts on a metal substrate. A metal substrate known to the inventor includes a tubular body and a honeycomb structure fixed in the tubular body. The honeycomb structure is formed by stacking and winding a flat plate and a wavy plate with each other, and the honeycomb structure is fixed in the tubular body by soldering. The surface of the honeycomb structure is applied with catalyst materials. Therefore, when exhaust gases pass through the metal substrate, the catalysts convert the hazardous gases into harmless gases, thereby reducing the air pollution caused by the gases exhausted from the engines.

### SUMMARY

However, because the gas channels in the metal substrate known to the inventor are linear, the retention time of the exhaust gases in the metal substrate is too short, causing insufficient conversion efficiency of the metal substrate. Moreover, the metal substrate is disposed in the high-temperature exhaustion pipe. Therefore, when the metal substrate is used for a period, the solders between the honeycomb structure and the tubular body may be oxidized owing to the high temperature. As a result, the honeycomb structure cannot be stably fixed in the tubular body or may even be detached from the tubular body. Consequently, the structural strength of the metal substrate is not sufficient.

In view of the above problem(s), a metal honeycomb substrate is provided.

According to some embodiments, a metal honeycomb substrate is provided and includes a tubular body, a flat plate, and a wavy plate. The tubular body has a receiving portion. The flat plate has a first region. The first region has a plurality of first holes, and a hole size of each of the first holes is in a range between substantially 0.8 mm and substantially 5 mm. The wavy plate is stacked with the flat plate to form a spiral structure. The spiral structure is received in the receiving portion. The wavy plate has a wavy-shaped cross section and includes a second region and a continuous region. The second region is connected to the continuous region. The wavy-shaped cross section includes a plurality of peak portions and a plurality of valley portions. The second region has a plurality of second holes, and a hole size of each of the second holes is in a range between substantially 0.8 mm and substantially 5 mm. A ratio of a total area of the first holes and the second holes to a total area of the flat plate and the wavy plate is in a range between substantially 35% and substantially 45%. The wavy plate has a solder region. The solder region overlaps at least one portion of at least one of the second region and the continuous region so as to form an overlapped portion. Solders are on outer sides of the peak portions and outer sides of the valley portions which are in the solder region. A ratio of an area of the solder region to an area of the wavy plate is in a range between substantially 20% and substantially 66%.

In some embodiments, the overlapped portion is in the second region, and the ratio of the area of the solder region to the area of the wavy plate is in a range between substantially 44% and substantially 66%.

In some embodiments, the overlapped portion is in the continuous region, and the ratio of the area of the solder region to the area of the wavy plate is in a range between substantially 20% and substantially 33%.

In some embodiments, the overlapped portion is in the second region and the continuous region, and the ratio of the area of the solder region to the area of the wavy plate is in a range between substantially 21% and substantially 40%.

In some embodiments, the continuous region includes a middle subregion, the second region includes two second subregions, the middle subregion is between the two second subregions, and the two second subregions and the middle subregion are arranged along a short-axis direction of the wavy plate. Moreover, in some embodiments, a hole size of each of the second holes in one of the two second subregions is different from a hole size of each of the second holes in the other second subregion.

In some embodiments, the continuous region includes two edge subregions, and the second region is between the two edge subregions.

In some embodiments, the middle subregion is connected to at least one of the two edge subregions.

In some embodiments, the continuous region includes a middle subregion, the second region includes two second subregions, the middle subregion is between the two second subregions, and the two second subregions and the middle subregion are arranged along a long-axis direction of the wavy plate.

In some embodiments, the continuous region further includes two edge subregions, and the two edge subregions are at two sides of the second region along the long-axis direction of the wavy plate.

In some embodiments, the solder region is not located in a portion of the spiral structure substantially within a range between 7.9 mm and 18.9 mm of an inner side of the spiral structure along a radial direction of the spiral structure.

In some embodiments, the metal honeycomb substrate further includes an immersion region, and the immersion region is at a gas-inlet end of the spiral structure.

In some embodiments, a metal honeycomb substrate is provided and includes a tubular body, a flat plate, and a wavy plate. The tubular body has a receiving portion. The flat plate has a first region. The first region has a plurality of first holes, and a hole size of each of the first holes is in a range between substantially 0.8 mm and substantially 5 mm. The wavy plate is stacked with the flat plate to form a spiral structure. The spiral structure is received in the receiving portion. The wavy plate has a wavy-shaped cross section and includes a second region and a continuous region. The second region is connected to the continuous region. The wavy-shaped cross section includes a plurality of peak portions and a plurality of valley portions. The second region has a plurality of second holes, and a hole size of each of the second holes is in a range between substantially 0.8 mm and substantially 5 mm. A ratio of a total area of the first holes and the second holes to a total area of the flat plate and the wavy plate is in a range between substantially 35% and substantially 45%. The wavy plate has a solder region. The solder region overlaps at least one portion of the second region and at least one portion of the continuous region. Solders are on outer sides of the peak portions and outer sides of the valley portions which are in the solder region. A ratio of the area of the solder region to the area of the wavy plate is in a range between substantially 21% and substantially 40%. The continuous region includes a middle subregion, the second region includes two second subregions, the middle subregion is between the two second subregions, and the two second subregions and the middle subregion are arranged along a short-axis direction of the wavy plate. The continuous region includes two edge subregions, and the second region is between the two edge subregions. The middle subregion is connected to at least one of the two edge subregions. A hole size of each of the second holes in one of the two second subregions is different from a hole size of each of the second holes in the other second subregions. The metal honeycomb substrate further includes an immersion region, and the immersion region is at a gas-inlet end of the spiral structure.

According to some embodiments, a metal honeycomb substrate is provided and includes a tubular body, a flat plate, and a wavy plate. The tubular body has a receiving portion. The flat plate has a first region. The first region has a plurality of first holes, and a hole size of each of the first holes is in a range between substantially 0.8 mm and substantially 5 mm. The wavy plate is stacked with the flat plate to form a spiral structure. The spiral structure is received in the receiving portion. The wavy plate includes a second region. The second region has a plurality of second holes, and a hole size of each of the second holes is in a range between substantially 0.8 mm and substantially 5 mm. The spiral structure has a spiral center and a central portion. A first cycle radially and outwardly extends from the spiral center of the spiral structure to form a spiral central hole. The central portion is within the spiral central hole, and the first cycle is a portion of the flat plate.

In some embodiments, a diameter of the spiral central hole is in a range between substantially 2.5 mm and substantially 6.0 mm.

In some embodiments, one of two ends of the central portion is connected to the first cycle, and the other end of the central portion is adjacent to an inner wall of the spiral central hole.

In some embodiments, the other end of the central portion has a folded portion.

In some embodiments, a second cycle and a third cycle of the spiral structure radially and outwardly extend from the spiral center, and the second cycle and the third cycle are portions of the flat plate.

According to some embodiments, a metal honeycomb substrate is provided and includes a tubular body, a flat plate, and a wavy plate. The tubular body has a receiving portion. The flat plate has a first region. The first region has a plurality of first holes, and a hole size of each of the first holes is in a range between substantially 0.8 mm and substantially 5 mm. The wavy plate is stacked with the flat plate to form a spiral structure. The spiral structure is received in the receiving portion. The wavy plate includes a second region. The second region has a plurality of second holes, and a hole size of each of the second holes is in a range between substantially 0.8 mm and substantially 5 mm. The spiral structure has a spiral center and a central portion. A first cycle radially and outwardly extends from the spiral center of the spiral structure to form a spiral central hole. The central portion is within the spiral central hole, and the first cycle is a portion of the flat plate. A diameter of the spiral central hole is in a range between 2.5 mm and 6.0 mm. One of two ends of the central portion is connected to the first cycle, and the other end of the central portion is adjacent to an inner wall of the spiral central hole. The other end of the central portion has a folded portion. A second cycle and a third cycle of the spiral structure radially and outwardly extend from the spiral center, and the second cycle and the third cycle are portions of the flat plate.

According to some embodiments, a spiral structure for a metal honeycomb substrate is provided and includes a flat plate and a wavy plate. The tubular body has a receiving portion. The flat plate has a first region. The first region has a plurality of first holes, and a hole size of each of the first holes is in a range between substantially 0.8 mm and substantially 5 mm. The wavy plate is stacked with the flat plate to form the spiral structure. The wavy plate includes a second region. The second region has a plurality of second holes, and a hole size of each of the second holes is in a range between substantially 0.8 mm and substantially 5 mm. The spiral structure has a spiral center and a central portion. A first cycle radially and outwardly extends from the spiral center of the spiral structure to form a spiral central hole. The central portion is within the spiral central hole, and the first cycle is a portion of the flat plate.

Based on the above, according to one or some embodiments, a proper area ratio is between the solder region and the wavy plate, so that the spiral structure winded by the wavy plate and the flat plate can be firmly soldered in the tubular body, thus allowing the metal honeycomb substrate to possess a sufficient mechanical strength. Moreover, according to one or some embodiments, the flat plate and the wavy plate of the spiral structure of the metal honeycomb substrate has a proper hole-opening rate, so that the retention time of the exhaust gases in the metal honeycomb substrate can be increased, thereby improving the flow turbulence in the metal honeycomb substrate to allow the metal honeycomb substrate to have a better conversion efficiency. Moreover, according to one or some embodiments, the spiral structure of the metal honeycomb substrate has the central portion. Therefore, the contact area between the exhaust gases and the spiral center of the spiral structure can be increased, thus improving the conversion efficiency of the metal honeycomb substrate.

### BRIEF DESCRIPTION OF THE DRAWINGS

The disclosure will become more fully understood from the detailed description given herein below for illustration only, and thus not limitative of the disclosure, wherein:
Fig. 1 illustrates a perspective view of a metal honeycomb substrate according to some embodiments of the instant disclosure;
Fig. 2 illustrates an exploded view of a metal honeycomb substrate according to some embodiments of the instant disclosure;
Fig. 3A illustrates a perspective view of a flat plate and a wavy plate of a metal honeycomb substrate according to some embodiments of the instant disclosure;
Fig. 3B illustrates a schematic lateral view showing the flat plate and the wavy plate of the metal honeycomb substrate are to be stacked with each other according to some embodiments of the instant disclosure;
Fig. 3C illustrates a schematic lateral view showing the flat plate and the wavy plate of the metal honeycomb substrate are stacked with each other according to some embodiments of the instant disclosure;
Fig. 4A illustrates a schematic view (1) of a second region and a continuous region of a wavy plate of a metal honeycomb substrate according to some embodiments of the instant disclosure, wherein the wavy plate is not processed to have a wavy-shaped cross section;
Fig. 4B illustrates a schematic view (2) of a second region and a continuous region of a wavy plate of a metal honeycomb substrate according to some embodiments of the instant disclosure, wherein the wavy plate is not processed to have a wavy-shaped cross section;
Fig. 4C illustrates a schematic view (3) of a second region and a continuous region of a wavy plate of a metal honeycomb substrate according to some embodiments of the instant disclosure, wherein the wavy plate is not processed to have a wavy-shaped cross section;
Fig. 5A illustrates a schematic view (1) of a first region of a flat plate of a metal honeycomb substrate according to some embodiments of the instant disclosure;
Fig. 5B illustrates a schematic view (2) of a first region of a flat plate of a metal honeycomb substrate according to some embodiments of the instant disclosure;
Fig. 5C illustrates a schematic view (1) of a second region of a wavy plate of a metal honeycomb substrate according to some embodiments of the instant disclosure, wherein the wavy plate is not processed to have a wavy-shaped cross section;
Fig. 5D illustrates a schematic view (2) of a second region of a wavy plate of a metal honeycomb substrate according to some embodiments of the instant disclosure, wherein the wavy plate is not processed to have a wavy-shaped cross section;
Fig. 6A illustrates a schematic view (1) of a second region, a continuous region, and a solder region of a wavy plate of a metal honeycomb substrate according to some embodiments of the instant disclosure, wherein the wavy plate is not processed to have a wavy-shaped cross section;
Fig. 6B illustrates a schematic view (2) of a second region, a continuous region, and a solder region of a wavy plate of a metal honeycomb substrate according to some embodiments of the instant disclosure, wherein the wavy plate is not processed to have a wavy-shaped cross section;
Fig. 6C illustrates a schematic view (3) of a second region, a continuous region, and a solder region of a wavy plate of a metal honeycomb substrate according to some embodiments of the instant disclosure, wherein the wavy plate is not processed to have a wavy-shaped cross section;
Fig. 7 illustrates a partial cross-sectional view of a spiral structure of a metal honeycomb substrate according to some embodiments of the instant disclosure;
Fig. 8A illustrates a schematic view (3) of a second region of a wavy plate of a metal honeycomb substrate according to some embodiments of the instant disclosure, wherein the wavy plate is not processed to have a wavy-shaped cross section;
Fig. 8B illustrates a schematic view (4) of a second region of a wavy plate of a metal honeycomb substrate according to some embodiments of the instant disclosure, wherein the wavy plate is not processed to have a wavy-shaped cross section;
Fig. 8C illustrates a schematic view (5) of a second region of a wavy plate of a metal honeycomb substrate according to some embodiments of the instant disclosure, wherein the wavy plate is not processed to have a wavy-shaped cross section;
Fig. 9A illustrates a schematic view (1) of a second region, a middle subregion, and a solder region of a wavy plate of a metal honeycomb substrate according to some embodiments of the instant disclosure, wherein the wavy plate is not processed to have a wavy-shaped cross section;
Fig. 9B illustrates a schematic view (2) of a second region, a middle subregion, and a solder region of a wavy plate of a metal honeycomb substrate according to some embodiments of the instant disclosure, wherein the wavy plate is not processed to have a wavy-shaped cross section;
Fig. 10A illustrates a schematic view (1) of a second region, a middle subregion, edge subregions, and a solder region of a wavy plate of a metal honeycomb substrate according to some embodiments of the instant disclosure, wherein the wavy plate is not processed to have a wavy-shaped cross section;
Fig. 10B illustrates a schematic view (2) of a second region, a middle subregion, edge subregions, and a solder region of a wavy plate of a metal honeycomb substrate according to some embodiments of the instant disclosure, wherein the wavy plate is not processed to have a wavy-shaped cross section;
Fig. 11 illustrates a schematic view (4) of a second region, a continuous region, and a solder region of a wavy plate of a metal honeycomb substrate according to some embodiments of the instant disclosure, wherein the wavy plate is not processed to have a wavy-shaped cross section;
Fig. 12A illustrates a schematic view (1) showing a manufacturing step of the metal honeycomb substrate according to some embodiments of the instant disclosure;
Fig. 12B illustrates a schematic view (2) showing a manufacturing step of the metal honeycomb substrate according to some embodiments of the instant disclosure;
Fig. 12C illustrates a schematic view showing a manufacturing step of the metal honeycomb substrate according to some other embodiments of the instant disclosure;
Fig. 13A illustrates a perspective view of a spiral structure of a metal honeycomb substrate according to some embodiments of the instant disclosure;
Fig. 13B illustrates an enlarged partial view of the "a" region of the spiral structure of the metal honeycomb substrate shown in Fig. 2, according to one embodiment of the instant disclosure;
Fig. 13C illustrates an enlarged partial view of the "a" region of the spiral structure of the metal honeycomb substrate shown in Fig. 2, according to another embodiment of the instant disclosure;
Fig. 14A illustrates a schematic view (5) of a second region, a continuous region, and a solder region of a wavy plate of a metal honeycomb substrate according to some embodiments of the instant disclosure, wherein the wavy plate is not processed to have a wavy-shaped cross section;
Fig. 14B illustrates a schematic view (6) of a second region, a continuous region, and a solder region of a wavy plate of a metal honeycomb substrate according to some embodiments of the instant disclosure, wherein the wavy plate is not processed to have a wavy-shaped cross section;
Fig. 15A illustrates a graph showing the emission amounts of carbon monoxide (CO) under different test conditions (new and after durability test) for a substrate without holes and metal honeycomb substrates according to some embodiments of the instant disclosure;
Fig. 15B illustrates a graph showing the emission amounts of non-methane hydrocarbon (NMHC) under different test conditions (new and after durability test) for the substrate without holes and the metal honeycomb substrates according to some embodiments of the instant disclosure;
Fig. 15C illustrates a graph showing the emission amounts of nitrogen oxides (NOx) under different test conditions (new and after durability test) for the substrate without holes and the metal honeycomb substrates according to some embodiments of the instant disclosure; and
Fig. 16 illustrates a bar graph showing the deterioration factor of the emission amounts of non-methane hydrocarbon (NMHC) for the substrate without holes and the metal honeycomb substrates according to some embodiments of the instant disclosure.

### DETAILED DESCRIPTION

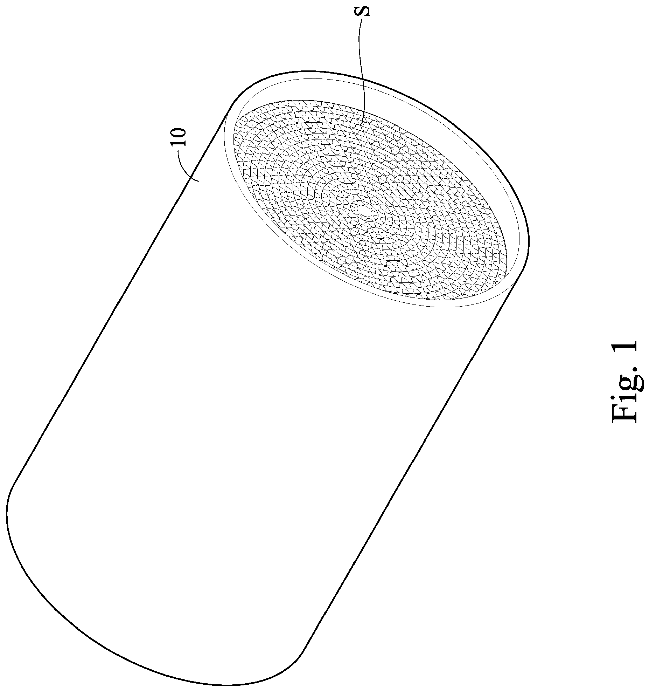

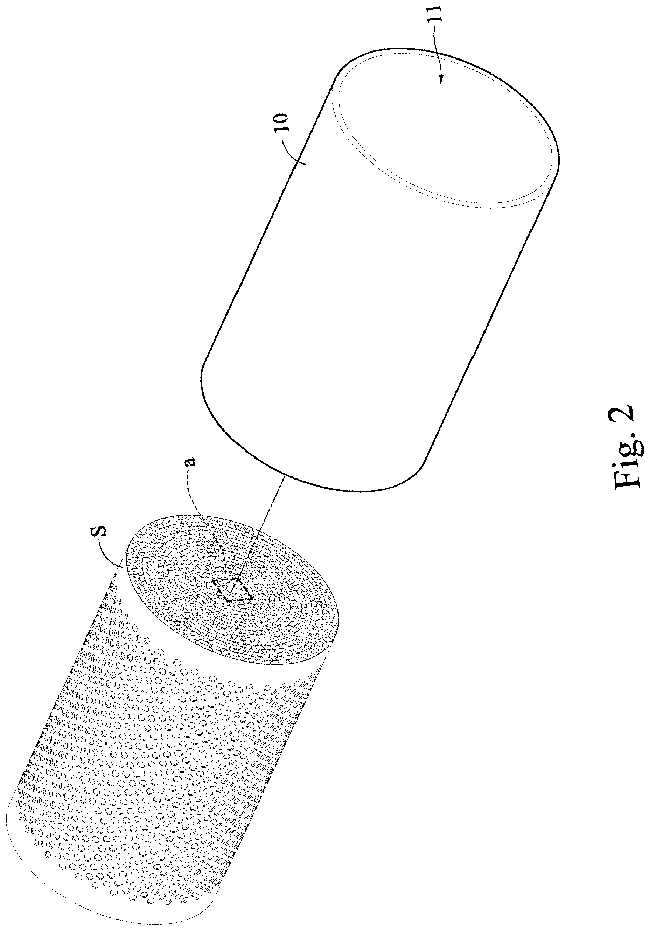

Please refer to Fig. 1 and Fig. 2. Fig. 1 illustrates a perspective view of a metal honeycomb substrate 100 according to some embodiments of the instant disclosure. Fig. 2 illustrates an exploded view of a metal honeycomb substrate 100 according to some embodiments of the instant disclosure. As shown in Fig. 1 and Fig. 2, a metal honeycomb substrate 100 is adapted to be disposed in the exhaust pipe of a transportation vehicle. The transportation vehicle may be a fuel engine vehicle or a hybrid electric vehicle. For example, the transportation vehicle may be, but not limited to, a motorcycle or a car. The metal honeycomb substrate 100 may be coated with catalyst materials (which generally include palladium (Pd), platinum (Pt), Rhodium (Rh), or other precious metals). Therefore, when the exhaust gases pass through the metal honeycomb substrate 100, palladium and platinum in the catalysts can respectively oxidize carbon monoxide (CO) and hydrocarbons (HC) contained in the exhaust gases to carbon dioxide and water, while rhodium in the catalysts can reduce nitrogen oxides (NOx) to nitrogen and oxygen. Therefore, the catalysts convert the hazardous gases passing through the metal honeycomb substrate 100 into harmless gases, thereby reducing the air pollution caused by the gases exhausted from the engines.

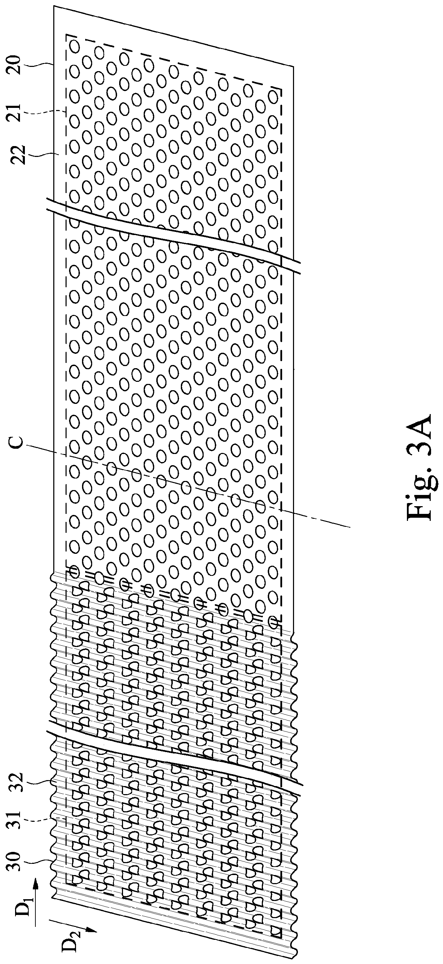

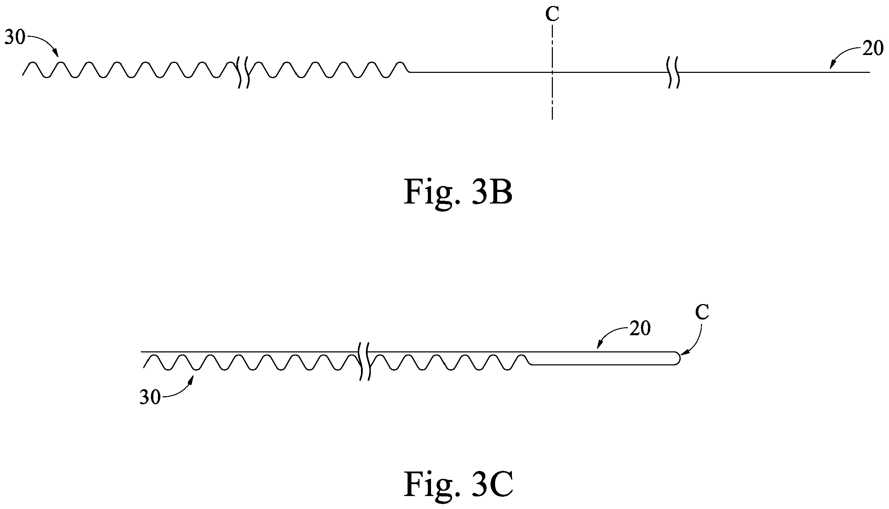

Please refer to Fig. 1, Fig. 2, and Fig 3A to Fig. 3C. Fig. 3A illustrates a perspective view of a flat plate 20 and a wavy plate 30 of a metal honeycomb substrate 100 according to some embodiments of the instant disclosure. Fig. 3B illustrates a schematic lateral view showing the flat plate 20 and the wavy plate 30 of the metal honeycomb substrate 100 are to be stacked with each other according to some embodiments of the instant disclosure. Fig. 3C illustrates a schematic lateral view showing the flat plate 20 and the wavy plate 30 of the metal honeycomb substrate 100 are stacked with each other according to some embodiments of the instant disclosure. As shown in Fig. 1, Fig. 2, and Fig. 3A to Fig. 3C, the metal honeycomb substrate 100 includes a tubular body 10, a flat plate 20, and a wavy plate 30. The tubular body 10 has a receiving portion 11. The flat plate 20 and the wavy plate 30 are stacked with each other (as shown in Fig. 3B and Fig. 3C), and the stacked structure is winded to form a spiral structure S. The spiral structure S is received in the receiving portion 11. In some embodiments, the outermost and innermost layers of the spiral structure S are both the flat plate 20. In some embodiments, the outermost layer (the flat plate 20) of the spiral structure S contacts an inner wall of the receiving portion 11 (as shown in Fig. 1 and Fig. 2).

The length and the diameter of the metal honeycomb substrate 100, the length and the thickness of the wavy plate 30, and the length and the thickness of the flat plate 20 may be designed according to requirements (for example, according to the size of the exhaustion pipe). In some embodiments, the thicknesses of the flat plate 20 and the wavy plate 30 may be in a range between substantially 0.02 mm and substantially 0.2 mm. The length of the metal honeycomb substrate 100 may be in a range between substantially 30 mm and substantially 220 mm, the diameter of the metal honeycomb substrate 100 may be in a range between substantially 25 mm and substantially 113.8 mm, the length of the wavy plate 30 may be in a range between substantially 600 mm and substantially 1600 mm, and the length of the flat plate 20 may be in a range between substantially 700 mm and substantially 1700 mm. In some embodiments, the length and the diameter of the metal honeycomb substrate 100 are respectively substantially 60 mm and substantially 35 mm, the length of the wavy plate 30 is substantially 657 mm, and the length of the flat plate 20 is substantially 780 mm. In some embodiments, the length and the diameter of the metal honeycomb substrate 100 are respectively substantially 60 mm and substantially 45 mm, the length of the wavy plate 30 is substantially 1120 mm, and the length of the flat plate 20 is substantially 1280 mm. In some embodiments, the length and the diameter of the metal honeycomb substrate 100 are respectively substantially 60 mm and substantially 52 mm, the length of the wavy plate 30 is substantially 1520 mm, and the length of the flat plate 20 is substantially 1690 mm.

In some embodiments, the flat plate 20 has a first region 21 (enclosed by the dashed line). The first region 21 has a plurality of first holes 21a, and a hole size (the diameter, Φ) of each of the first holes 21a is in a range between substantially 0.8 mm and substantially 5 mm. The hole sizes of the first holes 21a may be the same or different from each other, and the distances between two adjacent first holes 21a may be the same or different from each other. The wavy plate 30 includes a second region 31 (enclosed by the dashed line) and a continuous region 32, and the second region 31 is connected to the continuous region 32. The second region 31 has a plurality of second holes 31a, and a hole size of each of the second holes 31a is in a range between substantially 0.8 mm and substantially 5 mm. The hole sizes of the second holes 31a may be the same or different from each other, and the distances between two adjacent second holes 31a may be the same or different from each other.

Please refer to Fig. 3A again. The second region 31 of the wavy plate 30 has the second holes 31a, and the continuous region 32 is the portion of the wavy plate 30 without the second holes 31a. In some embodiments, the wavy plate 30 is formed by the second region 31 and the continuous region 32. The second region 31 is the region of the wavy plate 30 where the second holes 31a are located, and the edge of the second region 31 may be flushed with the outer edge of the second holes 31a at the outermost side of the second region 31; the continuous region 32 is the region of the wavy plate 30 except the second region 31. Similarly, the flat plate 20 is formed by the first region 21 and the continuous region 22. The first region 21 is the region where the first holes 21a are located, and the edge of the first region 21 may be flushed with the outer edge of the first holes 21a at the outermost side of the first region 21; the continuous region 22 is the region of the flat plate 20 except the first region 21. In some embodiments, the first region 21 and the continuous region 22 of the flat plate 20 respectively correspond to the second region 31 and the continuous region 32 of the wavy plate 30. For the sake of convenience, in the following embodiments, different configurations of the second region 31 and the continuous region 32 of the wavy plate 30 are described for illustrative purposes merely, and it should be noted that the configuration of the first region 21 and the continuous region 22 may be varied correspondingly.

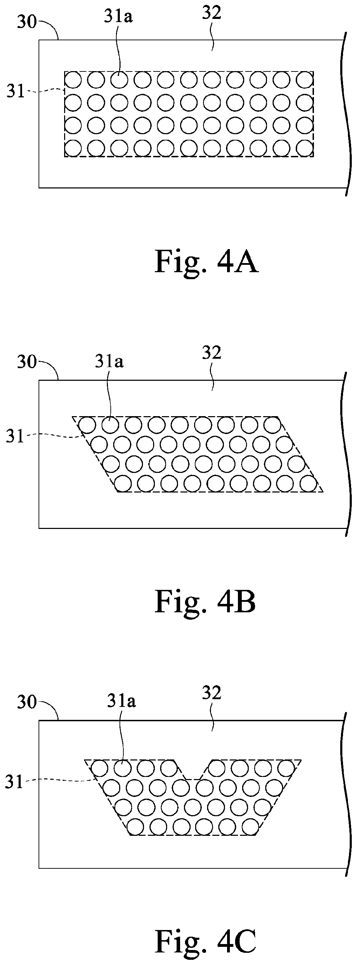

Please refer to Fig. 4A to Fig. 4C. Fig. 4A illustrates a schematic view (1) of a second region 31 and a continuous region 32 of a wavy plate 30 of a metal honeycomb substrate 100 according to some embodiments of the instant disclosure, wherein the wavy plate 30 is not processed to have a wavy-shaped cross section. Fig. 4B illustrates a schematic view (2) of a second region 31 and a continuous region 32 of a wavy plate 30 of a metal honeycomb substrate 100 according to some embodiments of the instant disclosure, wherein the wavy plate 30 is not processed to have a wavy-shaped cross section. Fig. 4C illustrates a schematic view (3) of a second region 31 and a continuous region 32 of a wavy plate 30 of a metal honeycomb substrate 100 according to some embodiments of the instant disclosure, wherein the wavy plate 30 is not processed to have a wavy-shaped cross section. For the sake of presentation in the drawings, in Fig. 4A to Fig. 4C, the configurations of the second region 31 and the continuous region 32 of the wavy plate 30 are illustrated by a wavy plate 30 that is not processed to have a wavy-shaped cross section. As shown in Fig. 4A, in this embodiment, the second region 31 is substantially of a rectangular shape, and the continuous region 32 is also substantially of a rectangular shape. As shown in Fig. 4B and Fig. 4C, in these embodiments, the second region 31 is substantially of a parallelogram shape or a V shape, and the continuous region 32 is the region of the wavy plate 30 except the second region 31. It is understood that, the shapes of the second region 31 provided in the embodiments are for illustrative purposes, and are not limitations of the instant disclosure.

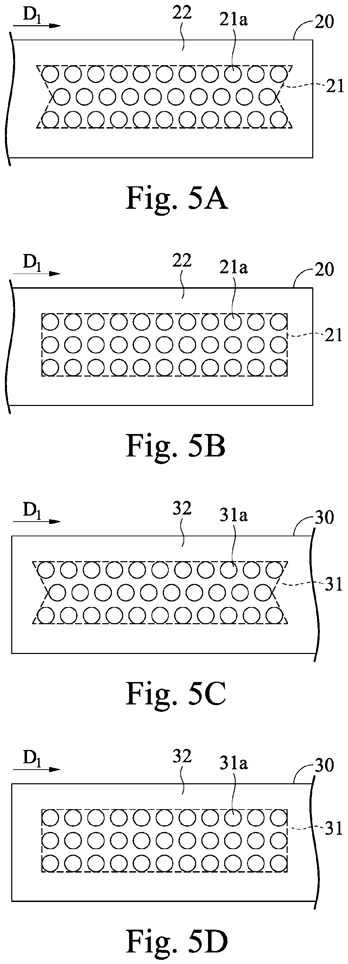

Please refer to Fig. 5A and Fig. 5B. Fig. 5A illustrates a schematic view (1) of a first region 21 of a flat plate 20 of a metal honeycomb substrate 100 according to some embodiments of the instant disclosure. Fig. 5B illustrates a schematic view (2) of a first region 21 of a flat plate 20 of a metal honeycomb substrate 100 according to some embodiments of the instant disclosure. As shown in Fig. 5A, in some embodiments, the first holes 21a may be arranged alternately in the first region 21 (for example, the first holes 21a in a first row and the first holes 21a in a second row are misaligned with each other by an offset along a long-axis direction D1 of the flat plate 20), but not limited thereto. As shown in Fig. 5B, in some other embodiments, the first holes 21a may be aligned with each other (for example, the first holes 21a in the first row and the first holes 21a in the second row are aligned with each other along the long-axis direction D1 of the flat plate 20). Please refer to Fig. 5C and Fig. 5D. Fig. 5C illustrates a schematic view (1) of a second region 31 of a wavy plate 30 of a metal honeycomb substrate 100 according to some embodiments of the instant disclosure, wherein the wavy plate 30 is not processed to have a wavy-shaped cross section. Fig. 5D illustrates a schematic view (2) of a second region 31 of a wavy plate 30 of a metal honeycomb substrate 100 according to some embodiments of the instant disclosure, wherein the wavy plate 30 is not processed to have a wavy-shaped cross section. For the sake of presentation in the drawings, in Fig. 5C and Fig. 5D, the configurations of the second region 31 of the wavy plate 30 are illustrated by a wavy plate 30 that is not processed to have a wavy-shaped cross section. As shown in Fig. 5C, similarly, in some embodiments, the second holes 31a may be arranged alternately in the second region 31 (for example, the second holes 31a in a first row and the second holes 31a in a second row are misaligned with each other by an offset along the long-axis direction D1 of the wavy plate 30), but not limited thereto. As shown in Fig. 5D, in some other embodiments, the second holes 31a may be aligned with each other (for example, the second holes 31a in the first row and the second holes 31a in the second row are aligned with each other along the long-axis direction D1 of the second plate 20).

In some embodiments, the shape of the first hole 21a and shape of the second hole 31a are round, but not limited thereto. In some embodiments, the first hole 21a and the second hole 31a may be of other geometrical shapes, and the shape of the first hole 21a may be different from the shape of the second hole 31a.

A ratio of a total area of the first holes 21a and the second holes 31a to a total area of the flat plate 20 and the wavy plate 30 (hereinafter, the hole-opening rate) is in a range between substantially 35% and substantially 45%. In one embodiment, the hole-opening rate is substantially 42%.

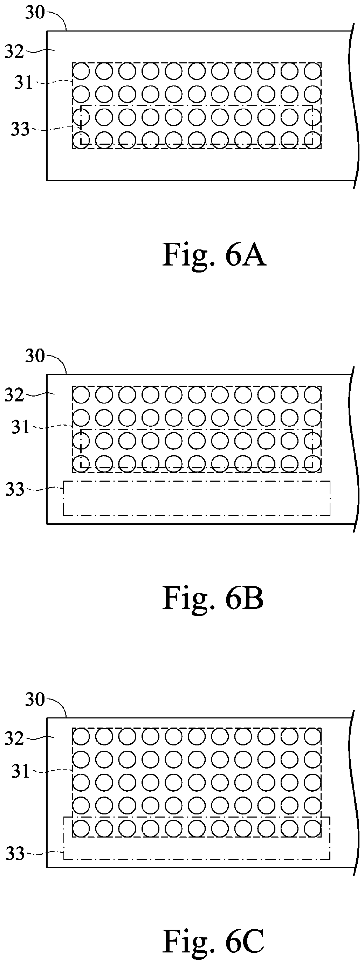

Please refer to Fig. 6A to Fig. 6C. Fig. 6A illustrates a schematic view (1) of a second region 31, a continuous region 32, and a solder region 33 of a wavy plate 30 of a metal honeycomb substrate 100 according to some embodiments of the instant disclosure, wherein the wavy plate 30 is not processed to have a wavy-shaped cross section. Fig. 6B illustrates a schematic view (2) of a second region 31, a continuous region 32, and a solder region 33 of a wavy plate 30 of a metal honeycomb substrate 100 according to some embodiments of the instant disclosure, wherein the wavy plate 30 is not processed to have a wavy-shaped cross section. Fig. 6C illustrates a schematic view (3) of a second region 31, a continuous region 32, and a solder region 33 of a wavy plate 30 of a metal honeycomb substrate 100 according to some embodiments of the instant disclosure, wherein the wavy plate 30 is not processed to have a wavy-shaped cross section. For the sake of presentation in the drawings, in Fig. 6A to Fig. 6C, the configurations of the second region 31, the continuous region 32, and the solder region 33 of the wavy plate 30 are illustrated by a wavy plate 30 that is not processed to have a wavy-shaped cross section. As shown in Fig. 6A to Fig. 6C, in some embodiments, the wavy plate 30 has a solder region 33 (presented by the chain-dotted line). The solder region 33 overlaps at least one portion of at least one of the second region 31 and the continuous region 32. In other words, in some embodiments, the solder region 33 overlaps at least one portion of the second region 31 (as shown in Fig. 6A), overlaps at least one portion of the continuous region 32 (as shown in Fig. 6B), or overlaps at least one portion of the second region 31 and at least one portion of the continuous region 32 (as shown in Fig. 6C).

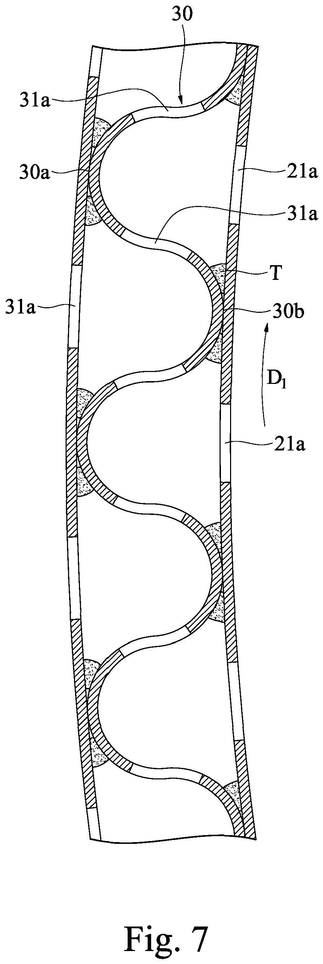

Please refer to Fig. 7. Fig. 7 illustrates a partial cross-sectional view of a spiral structure S of a metal honeycomb substrate 100 according to some embodiments of the instant disclosure. For the sake of clear illustration, in Fig. 7, only one layer of the wavy plate 30 and two layers of the flat plate 20 are illustrated for showing the cross section of the spiral structure S. As shown in Fig. 7, in some embodiments, upon viewed from the cross section of the spiral structure S, the wavy plate 30 has a wavy-shaped cross section, the wavy-shaped cross section includes a plurality of peak portions 30a and a plurality of valley portions 30b, and the peak portions 30a and the valley portions 30b are alternately arranged along the long-axis direction D1 of the wavy plate 30 (that is, along the circumferential direction of the spiral structure S). Solders T are on outer sides of the peak portions 30a and outer sides of the valley portions 30b which are in the solder region 33. As shown in Fig. 7, in this embodiment, the outer side is the portion of the peak portion 30a (or valley portion 30b) of the wavy plate 30 near the adjacent flat plate 20. Moreover, in some embodiments, a ratio of an area of the solder region 33 to an area of the wavy plate 30 is in a range between substantially 20% and substantially 66%.

Please refer to Fig. 6A again. In this embodiment, the solder region 33 overlaps at least one portion of the second region 31. In other words, in this embodiment, the solder region 33 is completely located within the second region 31; that is, during the manufacturing process, the solders T are applied on the second region 31, so that the solders T are on the portions of the second region 31 between the second holes 31a (when the viscosity of the solders T is lower, the solders T may be on the hole walls of the second holes 31a). Moreover, in this embodiment, the ratio of the area of the solder region 33 and the area of the wavy plate 30 is in a range between substantially 40% and substantially 66%.

Please refer to Fig. 6B again. In this embodiment, the solder region 33 overlaps at least one portion of the continuous region 32. In other words, in this embodiment, the solder region 33 is completely located within the continuous region 32; that is, during the manufacturing process, the solders T are applied on the continuous region 32. In this embodiment, the ratio of the area of the solder region 33 and the area of the wavy plate 30 is in a range between substantially 20% and substantially 33%.

Please refer to Fig. 6C again. In this embodiment, the solder region 33 overlaps at least one portion of the second region 31 and at least one portion of the continuous region 32. In other words, in this embodiment, the solder region 33 is partially on the continuous region 32 and partially on the second region 31; that is, during the manufacturing process, the solders T are applied on the continuous region 32 and the second region 31. Moreover, in this embodiment, the ratio of the area of the solder region 33 and the area of the wavy plate 30 is in a range between substantially 21% and substantially 40%.

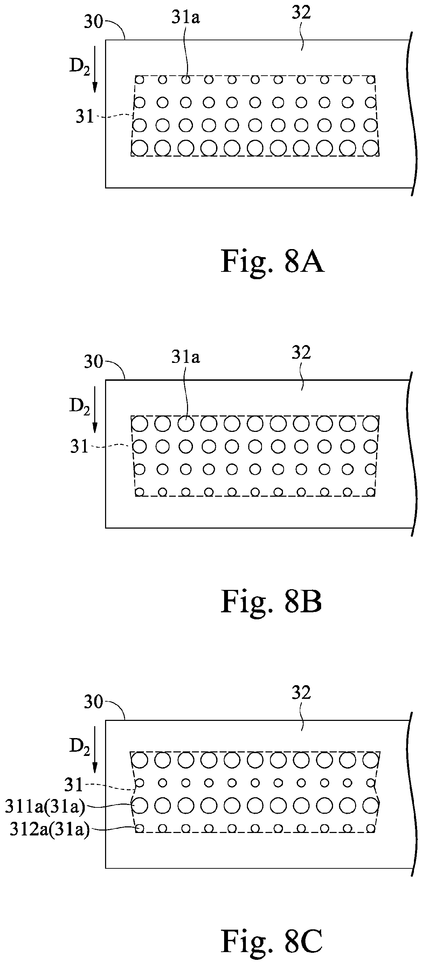

Please refer to Fig. 8A to Fig. 8C. Fig. 8A illustrates a schematic view (3) of a second region 31 of a wavy plate 30 of a metal honeycomb substrate 100 according to some embodiments of the instant disclosure, wherein the wavy plate 30 is not processed to have a wavy-shaped cross section. Fig. 8B illustrates a schematic view (4) of a second region 31 of a wavy plate 30 of a metal honeycomb substrate 100 according to some embodiments of the instant disclosure, wherein the wavy plate 30 is not processed to have a wavy-shaped cross section. Fig. 8C illustrates a schematic view (5) of a second region 31 of a wavy plate 30 of a metal honeycomb substrate 100 according to some embodiments of the instant disclosure, wherein the wavy plate 30 is not processed to have a wavy-shaped cross section. For the sake of presentation in the drawings, in Fig. 8A to Fig. 8C, the configurations of the second holes 31a of the second region 31 of the wavy plate 30 are illustrated by a wavy plate 30 that is not processed to have a wavy-shaped cross section. As shown in Fig. 8A, in some embodiments, the hole sizes of the second holes 31a of the second region 31 gradually increase along a short-axis direction D2 of the wavy plate 30 (the direction perpendicular to the long-axis direction D1). As shown in Fig. 8B, in some other embodiments, the hole sizes of the second holes 31a of the second region 31 gradually decrease along the short-axis direction D2 of the wavy plate 30. In other words, in some embodiments, the hole sizes of the second holes 31a of the second region 31 are not all the same and may increase or decrease along the short-axis direction D2 of the wavy plate 30, but not limited thereto. As shown in Fig. 8C, in some other embodiments, the second holes 31a have larger holes 311a and smaller holes 312a, and the larger holes 311a and the smaller holes 312a are alternately arranged along the short-axis direction D2.

Furthermore, it is understood that, the frames (denoted by a reference number 31) illustrated in Fig. 4B, Fig. 4C, Fig. 5C, and Fig. 8A to Fig. 8C may be simply of rectangular shapes. It should be noted that, these drawings are merely provided for indicating where the second region 31 is; as long as the hole-opening rate of the metal honeycomb substrate 100 is within the aforementioned range, whether the shape of the second region 31 is polygonal or rectangular is not important. Similarly, the frame (denoted by a reference number 21) illustrated in Fig. 5A may be simply of a rectangular shape. It should be noted that, the drawing is merely provided for indicating where the first region 21 is; as long as the hole-opening rate of the metal honeycomb substrate 100 is within the aforementioned range, whether the shape of the first region 21 is polygonal or rectangular is not important.

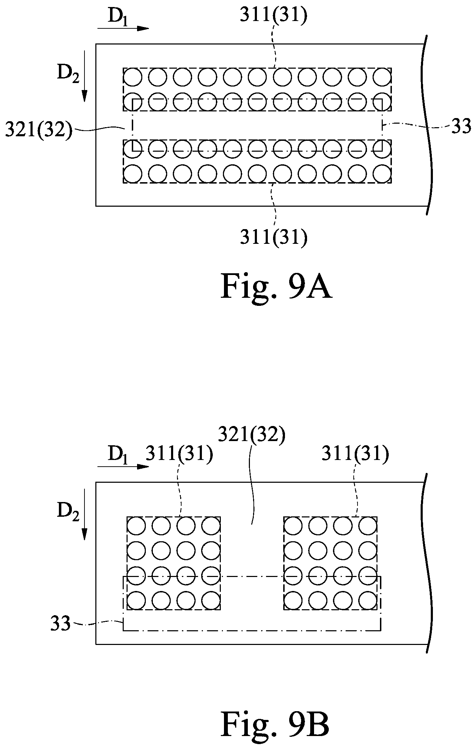

Please refer to Fig. 9A and Fig. 9B. Fig. 9A illustrates a schematic view (1) of a second region 31, a middle subregion 321, and a solder region 33 of a wavy plate 30 of a metal honeycomb substrate 100 according to some embodiments of the instant disclosure, wherein the wavy plate 30 is not processed to have a wavy-shaped cross section. Fig. 9B illustrates a schematic view (2) of a second region 31, a middle subregion 321, and a solder region 33 of a wavy plate 30 of a metal honeycomb substrate 100 according to some embodiments of the instant disclosure, wherein the wavy plate 30 is not processed to have a wavy-shaped cross section. For the sake of presentation in the drawings, in Fig. 9A and Fig. 9B, the configurations of the second region 31, the continuous region 32, and the solder region 33 of the wavy plate 30 are illustrated by a wavy plate 30 that is not processed to have a wavy-shaped cross section. In some embodiments, the continuous region 32 includes a middle subregion 321, the second region 31 includes two second subregions 311, and the middle subregion 321 is between the two second subregions 311. As shown in Fig. 9A, in some embodiments, the two second subregions 311 and the middle subregion 321 are arranged along the short-axis direction D2 of the wavy plate 30, in order of the second subregion 311, the middle subregion 321, and the second subregion 311, and the solder region 33 overlaps portions of the two second subregions 311 adjacent to the middle subregion 312. As shown in Fig. 9B, in some embodiments, the two second subregions 311 and the middle subregion 312 are arranged along the long-axis direction D1 of the wavy plate 30, in order of the second subregion 311, the middle subregion 312, and the second subregion 311; in these embodiments, the solder region 33 overlaps portions of the two second subregions 311 and a portion of the middle subregion 321, and the overlapped portion is at below the two second subregions 311 and the middle subregion 321 (as illustrated in Fig. 9B).

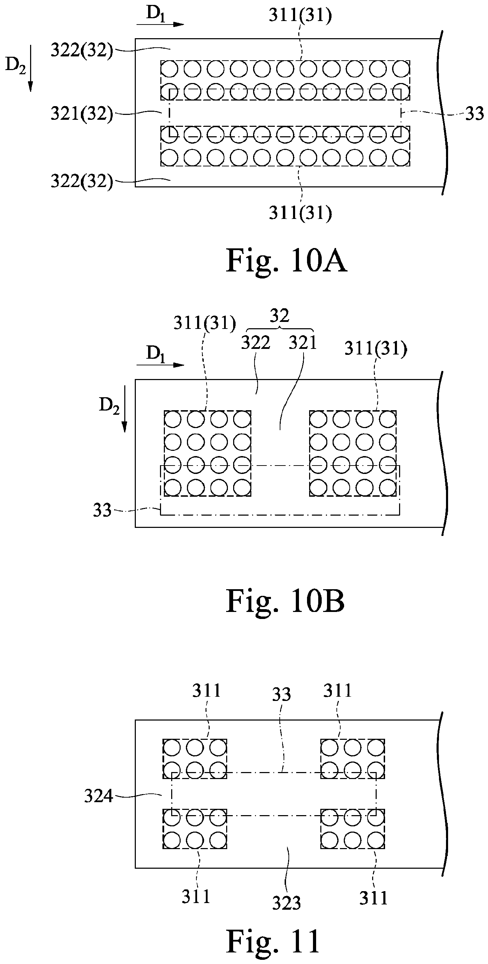

Please refer to Fig. 10A and Fig. 10B. Fig. 10A illustrates a schematic view (1) of a second region 31, a middle subregion 321, edge subregions 322, and a solder region 33 of a wavy plate 30 of a metal honeycomb substrate 100 according to some embodiments of the instant disclosure, wherein the wavy plate 30 is not processed to have a wavy-shaped cross section. Fig. 10B illustrates a schematic view (2) of a second region 31, a middle subregion 321, edge subregions 322, and a solder region 33 of a wavy plate 30 of a metal honeycomb substrate 100 according to some embodiments of the instant disclosure, wherein the wavy plate 30 is not processed to have a wavy-shaped cross section. For the sake of presentation in the drawings, in Fig. 10A and Fig. 10B, the configurations of the second region 31, the continuous region 32, and the solder region 33 of the wavy plate 30 are illustrated by a wavy plate 30 that is not processed to have a wavy-shaped cross section. In some embodiments, the continuous region 32 further includes two edge subregions 322, and the two edge subregions 322 are at two sides of the second region 31 along the long-axis direction D1 of the wavy plate 30 (the second region 31 is between the two edge subregions 322). Specifically, as shown in Fig. 10A, in some embodiments, the two edge subregions 322, the two second subregions 311, and the middle subregion 321 are arranged along the short-axis direction D2 of the wavy plate 30, in order of the edge subregion 322, the second subregion 311, the middle subregion 321, the second subregion 311, and the edge subregion 322. Therefore, the two edge subregions 322 of the continuous region 32 are parallel to the middle subregion 321. As shown in Fig. 10B, in some embodiments, the two edge regions 322 and the second region 31 are arranged along the short-axis direction D2 of the wavy plate 30, in order of the edge subregion 322, the second region 31, and the edge subregion 322. Moreover, in such embodiments, the two second subregions 311 and the middle subregion 321 are arranged along the long-axis direction D1 of the wavy plate 30, in order of the second subregion 311, the middle subregion 321, and the second subregion 311. It is understood that, the positions of the solder region 33 in Fig. 10A and Fig. 10B may be referred to the embodiments shown in Fig. 9A and Fig. 9B.

Moreover, as shown in Fig. 10B, in some embodiments, the middle subregion 321 is connected to at least one of the two edge subregions 322. In other words, in some embodiments, the middle subregion 321 of the continuous region 32 is connected to the upper edge subregion 322, the lower edge subregion 322, or both the upper edge subregion 322 and the lower edge subregion 322, so that the continuous region 32 is T-shaped, inversed T-shaped, or H-shaped. Moreover, in some embodiments, the hole size of each of the second holes 31a in one of the two second subregions 311 is different from the hole size of each of the second holes 31a in the other second subregion 311. Furthermore, in some embodiments, the hole sizes of the second holes 31a in the same second subregion 311 may be not totally the same.

Please refer to Fig. 11. Fig. 11 illustrates a schematic view (4) of a second region 31, a continuous region 32, and a solder region 33 of a wavy plate 30 of a metal honeycomb substrate 100 according to some embodiments of the instant disclosure, wherein the wavy plate 30 is not processed to have a wavy-shaped cross section. For the sake of presentation in the drawings, in Fig. 11, the configurations of the second region 31, the continuous region 32, and the solder region 33 of the wavy plate 30 are illustrated by a wavy plate 30 that is not processed to have a wavy-shaped cross section. As shown in Fig. 11, in some embodiments, the second region 31 includes four second subregions 311, and the continuous region 32 includes a longitudinal middle subregion 323 and a transversal middle subregion 324 and is between the second subregions 311. Therefore, the longitudinal middle subregion 323 and the transversal middle subregion 324 together form a cross-shaped structure to divide the second region 31 into a 2^{∗}2 array (into the four second subregions 311).

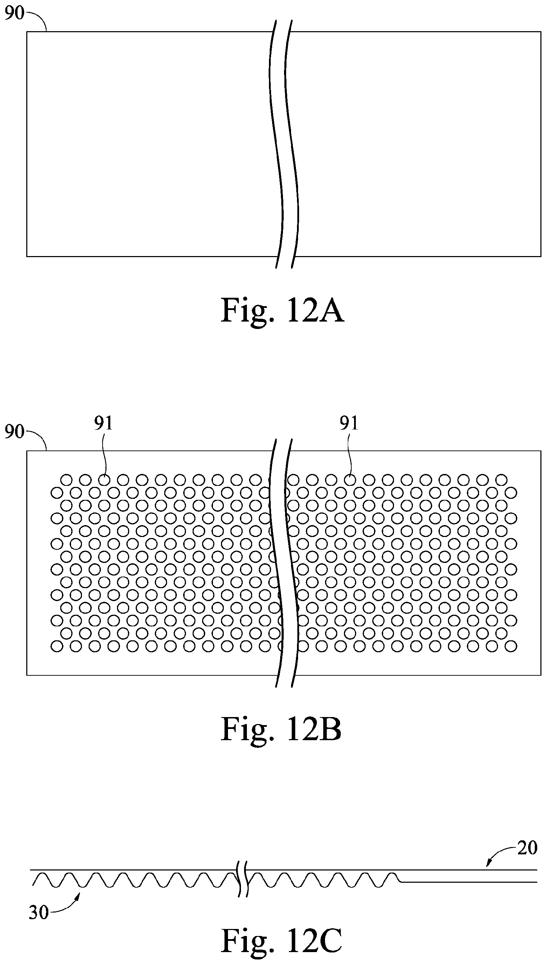

Please further refer to Fig. 12A, Fig. 12B, and refer to Fig. 3A to Fig. 3C again. Fig. 12A illustrates a schematic view (1) showing a manufacturing step of the metal honeycomb substrate 100 according to some embodiments of the instant disclosure. Fig. 12B illustrates a schematic view (2) showing a manufacturing step of the metal honeycomb substrate 100 according to some embodiments of the instant disclosure. Fig. 12C illustrates a schematic view showing a manufacturing step of the metal honeycomb substrate 100 according to some other embodiments of the instant disclosure. In the following paragraphs, the manufacturing process of the metal honeycomb substrate 100 according to one or some embodiments are described with drawings. First, a flat continuous plate 90 (as shown in Fig. 12A) is processed by a stamping machine (such as a punch machine) to form holes 91 (as shown in Fig. 12B). Next, a portion of the continuous plate 90 having the holes 91 is processed by a wavy-shape forming machine to form the wavy-shaped cross section so as to form the wavy plate 30, and the rest portion of the continuous plate 90 having the holes 91 is not processed to form the wavy-shaped cross section so as to form the flat plate 20 (as shown in Fig. 3A and Fig. 3B). Then, according to the foregoing embodiments, solders T are applied on the solder region 33 of the wavy plate 30. In one embodiment, both the front surface and the rear surface of the solder region 33 of the wavy plate 30 are applied with the solders T. Next, the flat plate 20 and the wavy plate 30 are folded and stacked with each other by taking the center line C as the folding line (as shown in Fig. 3B and Fig. 3C), and the folded plates are winded by a winding machine to form a spiral structure S (as shown in Fig. 2). Then, the spiral structure S is received in the receiving portion 11 of the tubular body 10 to form a semi-product. Last, the semi-product is placed and heated in a vacuum oven, so that the solders T are molten to allow the spiral structure S to be firmly fixed in the receiving portion 11 of the tubular body 10. In some other embodiments, after the continuous plate 90 is processed to have holes 91, the continuous plate 90 having the holes 91 are cut into two parts, one of the cut plates is directly served as the flat plate 20, and the other cut plate is processed to be the wavy plate 30 with a short section of flat plate structure. Next, the two plates are stacked with each other (as shown in Fig. 12C) and winded to form a spiral structure S, and then the spiral structure S is received in the receiving portion 11 of the tubular body 10.

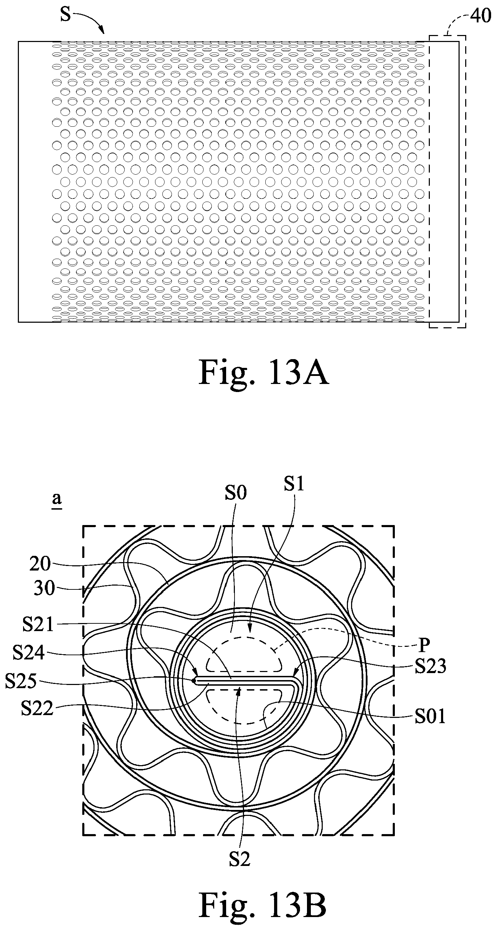

Please refer to Fig. 13A. Fig. 13A illustrates a perspective view of a spiral structure S of a metal honeycomb substrate 100 according to some embodiments of the instant disclosure. As shown in Fig. 13A, in some embodiments, the metal honeycomb substrate 100 further includes an immersion region 40, and the immersion region 40 is at a gas-inlet end of the spiral structure S (in this embodiment, the gas-inlet end of the spiral structure corresponds to the end of the metal honeycomb substrate 100 encountering the exhaust gases upon the metal honeycomb substrate 100 is disposed in the exhaust pipe; here, the right side of Fig. 13A). Specifically, in some embodiments, during the manufacturing process of the metal honeycomb substrate 100, after the spiral structure S is manufactured, the manufacturing process may further include an immersion step in which the gas-inlet end of the spiral structure S is immersed into a solder solution (the immersed depth of the spiral structure S may be in a range between substantially 3 mm and substantially 15 mm). Therefore, the spiral structure S not only has the paste-like solders T on the solder region 33 but also has the solder solution with a greater mobility at the gas-inlet end. Hence, during the step of placing the semi-product into the vacuum oven for soldering, the solders T in the solder solutions allow the adhesion between portions of the flat plate 20 and portions of the wavy plate 30 at the gas-inlet end of the spiral structure S to be much stronger, thereby increasing the structural strength of the gas-inlet end of the spiral structure S. Therefore, the issue that the gas-inlet end of the spiral structure S has an insufficient structural strength owing to the exposure to the high-temperature exhaust gases can be improved. In some other embodiments, not only the gas-inlet end of the spiral structure S is immersed into the solder solution, but also the gas-outlet end of the spiral structure S is immersed into the solder solution, thereby increasing the structural strengths of the gas-inlet end and the gas-outlet end of the spiral structure S.

Moreover, the solder solution has a better mobility as compared with the solders T. Therefore, after the immersion step, excessive solders T are not retained at the gas-inlet end of the spiral structure S. Hence, after the semi-product is placed in the vacuum oven and processed with the soldering process, excessive soldering residues are not produced to block the holes of the spiral structure S. Consequently, the flowing of the exhaust gases is not affected by the soldering residues, so that the conversion efficiency of the metal honeycomb substrate 100 is not reduced.

Please refer to Fig. 3A to Fig. 3C and Fig. 13B. Fig. 13B illustrates an enlarged partial view of the "a" region of the spiral structure S of the metal honeycomb substrate 100 shown in Fig. 2, according to one embodiment of the instant disclosure. In some embodiments, the length of the flat plate 20 is longer than the length of the wavy plate 30 in a flat condition (upon the wavy plate 30 is not processed to have the wavy-shaped cross section), and the difference is, for example between substantially 7.9 mm and 18.9 mm. Because the length of the flat plate 20 is longer than the length of the wavy plate 30, after the flat plate 20 and the wavy plate 30 are stacked with each other and winded to form the spiral structure S, the innermost one to five cycles of the spiral structure S (the center portion of the spiral structure S) are only winded by the flat plate 20, instead of being alternately winded by the flat plate 20 and the wavy plate 30. Under such configuration, solders T are not needed in the innermost one to five cycles (the solder region 33 is located in a portion of the spiral structure S substantially within a range between 7.9 mm and 18.9 mm of an inner side of the spiral structure S along a radial direction of the spiral structure S). Therefore, the issue that excessive solders T block the central hole of the spiral structure S (the central spiral hole S0) can be prevented, thus not affecting the conversion efficiency of the metal honeycomb substrate 100.

Please refer to Fig. 13B again. The spiral structure S has a spiral center S1 and a central portion S2. A first cycle radially and outwardly extends from the spiral center S1 of the spiral structure S to form a spiral central hole S0. The central portion S2 is within the spiral central hole S0, and the first cycle is a portion of the flat plate 20. In this embodiment, the central portion S2 is formed by stacking the two portions S21, S22 of the flat plate 20 with each other. Moreover, in this embodiment, viewed from the axial direction of the spiral structure S, the two portions S21, S22 are substantially parallel to each other (as shown in Fig. 13B), but not limited thereto. In other words, in the embodiment that the two portions S21, S22 of the central portion S2 are parallel to each other, as shown in Fig. 13B, the holding portions P (illustrated by dotted lines) of the winding machine for positioning the central portion S2 holds the entire portion (or most portions) of the central portion S2 in a surface-contact manner so as to wind the flat plate 20 and the wavy plate 30 to form the spiral structure S. In some embodiments, the central portion S2 may have at least one folded structure, and the angle of the folded structure may be an obtuse angle or an acute angle. In other words, in this embodiment, the holding portions of the winding machine for positioning the central portion S2 holds at least one portion of the central portion S2 in a point-contact manner so as to wind the flat plate 20 and the wavy plate 30 to form the spiral structure S, so that the central portion S2 has at least one folded structure.

Please refer to Fig. 13B. In some embodiments, one end S23 of the central portion S2 is connected to the first cycle, and the other end S24 of the central portion S2 is adjacent to an inner wall S01 of the spiral central hole S0. In this embodiment, the other end S24 of the central portion S2 does not contact the inner wall S01 of the spiral central hole S0 (the inner wall of the first cycle). Moreover, in this embodiment, the central portion S2 divides the spiral central hole S0 into two sections whose areas are substantially the same, but not limited thereto. In some embodiments, the central portion S2 may divide the spiral central hole S0 into two sections whose area ratio is 1:2, 1: 3, 1: 4, or the like.

Please refer to Fig. 13B again. In some embodiments, the diameter of the spiral central hole S0 is in a range between substantially 2.5 mm and substantially 6.0 mm. In some embodiments, the other end S24 of the central portion S2 has a folded portion S25 (in other words, in these embodiments, the two portions S21, S22 of the central portion S2 are connected to each other to form the folded portion S25), but not limited thereto. In some embodiments, the two portions S21, S22 of the central portion S2 are separated pieces, as shown in Fig. 12C. Therefore, according to some embodiments, with the configuration of the central portion S2, the contact area between the exhaust gases and the spiral center S1 of the spiral structure S can be increased, thereby increasing the conversion efficiency of the metal honeycomb substrate 100.

In the foregoing embodiments, the first cycle radially and outwardly extending from the spiral center S1 of the spiral structure S is a portion of the flat plate 20, but not limited thereto. In some embodiments, a second cycle and a third cycle of the spiral structure S radially and outwardly extend from the spiral center S1, and the second cycle and the third cycle are portions of the flat plate 20. In other words, in these embodiments, "the first cycle", "the second cycle", and "the third cycle" are portions of the spiral structure S that are only winded by the flat plate 20. It is understood that, according to different requirements, the spiral center S1 of the spiral structure S may have one to five cycles which are formed by only winding the flat plate 20. Furthermore, in some embodiments, the size of the spiral central hole S0 may be adjusted according to different requirements. Specifically, when the spiral central hole S0 is bigger, the gas flux is larger; however, the retention time of the exhaust gases in the metal honeycomb substrate 100 is shorter, thereby having a poorer conversion efficiency. On the other hand, when the spiral central hole S0 is smaller, the retention time of the exhaust gases in the metal honeycomb substrate 100 is longer, thereby having a better conversion efficiency; however, because of the smaller size of the spiral central hole S0, the spiral central hole S0 may be blocked easily.

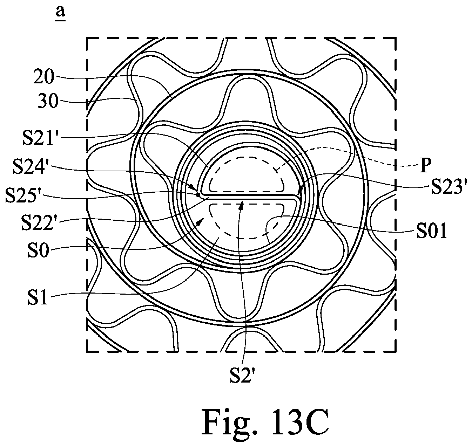

Please refer to Fig. 13C. Fig. 13C illustrates an enlarged partial view of the "a" region of the spiral structure S of the metal honeycomb substrate 100 shown in Fig. 2, according to another embodiment of the instant disclosure. As shown in Fig. 13C, in this embodiment, the spiral structure S has a spiral center S1 and a central portion S2'. A first cycle radially and outwardly extends from the spiral center S1 of the spiral structure S to form a spiral central hole S0. The central portion S2' is within the spiral central hole S0, and the first cycle is a portion of the flat plate 20. In this embodiment, the central portion S2' is formed the two portions S21', S22' of the flat plate 20. Moreover, in this embodiment, viewed from the axial direction of the spiral structure S, the two portions S21', S22' substantially form a D-shaped structure (as shown in Fig. 13C), but not limited thereto.

In one embodiment, for the manufacturing of the spiral structure S, two semi-spherical shaped holding portions P (illustrated by dotted lines) of a winding machine hold portions of flat plate 20 and the wavy plate 30 near the center line C (as shown in Fig. 3A and Fig. 3B), and then the flat plate 20 and the wavy plate 30 are winded by the winding machine to form the spiral structure S. Specifically, in one embodiment, the portion of the flat plate 20 between the two holding portions P is a central portion S22', and the portion which surrounds the outer portion of one of the two holding portions P is a curved portion S21'.

Please refer to Fig. 13c. In some embodiments, one end S23' of the central portion S2' is connected to the first cycle, and the other end S24' of the central portion S2' is adjacent to an inner wall S01 of the spiral central hole S0.

Please refer to Fig. 13C again. In some embodiments, the other end S24' of the central portion S2' has a folded portion S25', but not limited thereto.

Therefore, according to some embodiments, with the configuration of the central portion S2', the contact area between the exhaust gases and the spiral center S1 of the spiral structure S can be increased, thereby increasing the conversion efficiency of the metal honeycomb substrate 100.

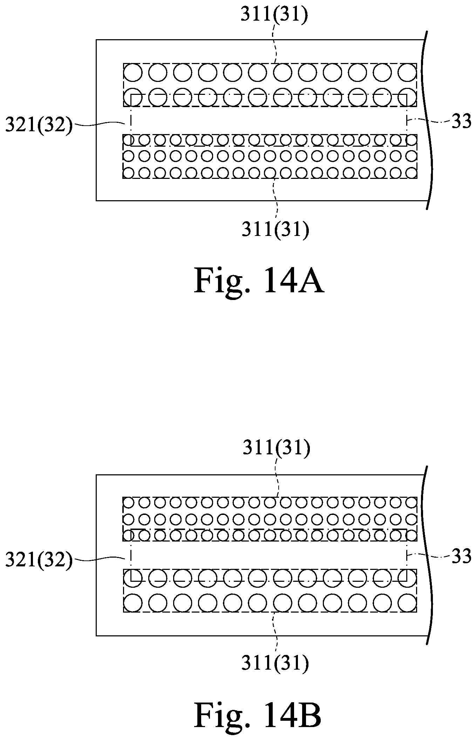

Please refer to Fig. 14A and Fig. 14B. Fig. 14A illustrates a schematic view (5) of a second region 31, a continuous region 32, and a solder region 33 of a wavy plate 30 of a metal honeycomb substrate 100 according to some embodiments of the instant disclosure, wherein the wavy plate 30 is not processed to have a wavy-shaped cross section. Fig. 14B illustrates a schematic view (6) of a second region 31, a continuous region 32, and a solder region 33 of a wavy plate 30 of a metal honeycomb substrate 100 according to some embodiments of the instant disclosure, wherein the wavy plate 30 is not processed to have a wavy-shaped cross section. For the sake of presentation in the drawings, in Fig. 14A and Fig. 14B, the configurations of the second region 31, the continuous region 32, and the solder region 33 of the wavy plate 30 are illustrated by a wavy plate 30 that is not processed to have a wavy-shaped cross section. In some embodiments, the sizes of the two second subregions 311 may be the same, and the hole size of each of the second holes 31a in one of the two second subregions 311 is different from the hole size of each of the second holes 31a in the other second subregion 311. Therefore, in some embodiments, as shown in Fig. 14A, the hole sizes of the second holes 31a in the upper second subregion 311 are larger, and the holes sizes of the second holes 31a in the lower second subregion 311 are smaller. Therefore, in these embodiments, the number of the second holes 31a in the upper second subregion 311 is less, and the number of the second holes 31a in the lower second subregion 311 is more. Alternatively, in some embodiments, as shown in Fig. 14B, the hole sizes of the second holes 31a in the upper second subregion 311 are smaller, and the holes sizes of the second holes 31a in the lower second subregion 311 are larger. Therefore, in these embodiments, the number of the second holes 31a in the upper second subregion 311 is more, and the number of the second holes 31a in the lower second subregion 311 is less.

In some embodiments, the hole sizes of the first holes 21a of the first region 21 of the flat plate 20 may be different from the hole sizes of the second holes 31a of the second region 31 of the wavy plate 30. For example, the first holes 21a are larger, while the second holes 31a are smaller. Therefore, as to the embodiment that the solder region 33 overlaps the second region 31, because the second holes 31a are smaller, the solders T are prone to be provided on portions between the second holes 31a of the second region 31, thereby increasing the adhesion strength between the flat plate 20 and the wavy plate 30.

Moreover, in some embodiment, during the manufacturing process, in addition to providing the solders T on the solder region 33, the solders T may be also provided on an end of the wavy plate 30 away from the flat plate 20 (along the long-axis direction D1), thereby further increasing the structural strength of the outer peripheral portion of the spiral structure S.

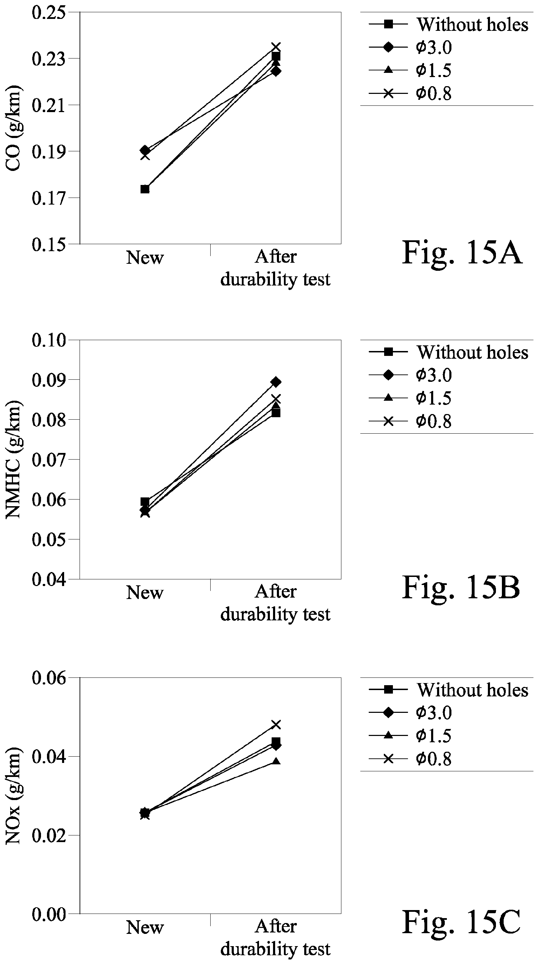

In order to measure the conversion efficiency of the substrates for exhaust gases, a substrate without holes (in which both the flat plate and the wavy plate do not have holes, as a control substrate) and metal honeycomb substrates 100 with different hole sizes (the hole sizes are respectively 3 mm (Φ = 3 mm), 1.5 mm (Φ = 1.5 mm), and 0.8 mm (Φ = 0.8 mm)) are installed in an exhaustion pipe of a motorcycle and tested according to relevant test regulations (such as the ECE R40 regulation) to measure the emission amounts of the exhaust gases from the exhaustion pipe, respectively. Fig. 15A illustrates a graph showing the emission amounts of carbon monoxide (CO) under different test conditions (new and after durability test) for a substrate without holes (the control substrate) and metal honeycomb substrates 100 according to some embodiments of the instant disclosure. Fig. 15B illustrates a graph showing the emission amounts of non-methane hydrocarbon (NMHC) under different test conditions (new and after durability test) for the substrate without holes (the control substrate) and the metal honeycomb substrates 100 according to some embodiments of the instant disclosure. Fig. 15C illustrates a graph showing the emission amounts of nitrogen oxides (NOx) under different test conditions (new and after durability test) for the substrate without holes (the control substrate) and the metal honeycomb substrates 100 according to some embodiments of the instant disclosure. In these embodiments, the test condition "new" indicates that after the substrate (the control substrate and the metal honeycomb substrates 100) is manufactured (including applying the catalyst on the substrate), a measurement is directly performed on the substrate according to the foregoing regulations without any treatment to obtain the exhaust gas emission amount; on the other hand, the test condition "after durability test" indicates that after the substrate is manufactured (including applying the catalyst on the substrate), the substrate is firstly installed in the exhaustion pipe of a motorcycle to perform an engine durability test under relevant test criteria, and a measurement is performed on the substrate according to the foregoing regulations to obtain the exhaust gas emission amount. The engine durability test is provided to simulate that the substrate is used for a long time through a high-temperature environment. As shown in Fig. 15A to Fig. 15C, the differences between the emission amount measured from the pipe having the control substrate and the emission amounts measured from the pipes having the substrates with different hole sizes under the test condition "new" are not apparent. While the differences between the emission amount measured from the pipe having the control substrate and the emission amounts measured from the pipes having the substrates with different hole sizes under the test condition "after durability test" are much clearer; it can be seen that, as compared with the control substrate, the emission amounts measured from the pipes having most of the metal honeycomb substrates 100 are lower, indicating that after the metal honeycomb substrates 100 are used for a long time, the metal honeycomb substrates 100 still have better conversion efficiencies.

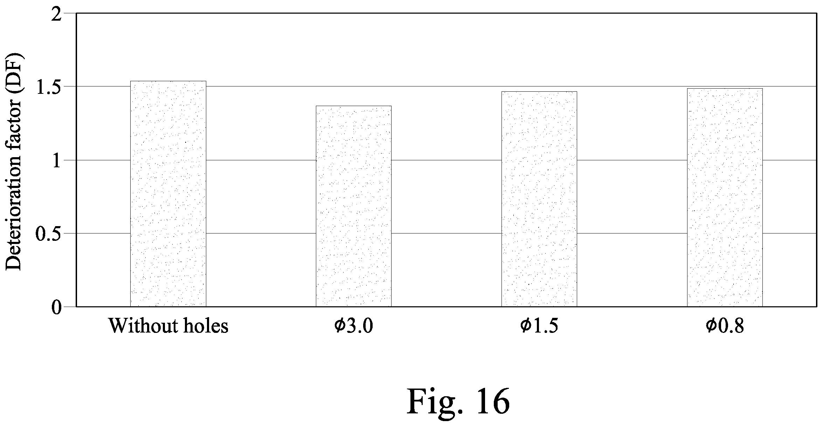

Please refer to Fig. 16. Fig. 16 illustrates a bar graph showing the deterioration factor of the emission amounts of non-methane hydrocarbon (NMHC) for the substrate without holes (control substrate) and the metal honeycomb substrates 100 according to some embodiments of the instant disclosure. In this embodiment, the definition of the deterioration factor is, [the exhaust gas emission amount under the test condition "new"] over [the exhaust gas emission amount under the test condition "after durability test"]. When the deterioration factor is higher, the substrate is prone to have thermal aging under a long-time use, thereby reducing the conversion efficiency of the substrate. Therefore, as shown in Fig. 16, as compared with the substrate without holes (the control substrate), the deterioration factor of the emission amounts of non-methane hydrocarbon (NMHC) from the pipes having most of the metal honeycomb substrates 100 are lower, indicating that the metal honeycomb substrates 100 have longer service lives.

Based on the above, according to one or some embodiments, a proper area ratio is the solder region 33 and the wavy plate 30, so that the spiral structure S winded by the wavy plate 30 and the flat plate 20 can be firmly soldered in the tubular body 10, thus allowing the metal honeycomb substrate 100 to possess a sufficient mechanical strength. Moreover, according to one or some embodiments, the flat plate 20 and the wavy plate 30 of the spiral structure S of the metal honeycomb substrate 100 has a proper hole-opening rate, so that the retention time of the exhaust gases in the metal honeycomb substrate 100 can be increased, thereby improving the flow turbulence in the metal honeycomb substrate 100 to allow the metal honeycomb substrate 100 to have a better conversion efficiency. Moreover, according to one or some embodiments, the spiral structure S of the metal honeycomb substrate 100 has the central portion S2. Therefore, the contact area between the exhaust gases and the spiral center S0 of the spiral structure S can be increased, thus improving the conversion efficiency of the metal honeycomb substrate 100.

## Claims

1. A metal honeycomb substrate (100), **characterized in that** the metal honeycomb substrate (100) comprises:
A tubular body (10) having a receiving portion (11);
a flat plate (20) having a first region (21), wherein the first region (21) has a plurality of first holes (21a), and a hole size of each of the first holes (21a) is in a range between substantially 0.8 mm and substantially 5 mm; and
a wavy plate (30) stacked with the flat plate (20) to form a spiral structure (S), wherein the spiral structure (S) is received in the receiving portion (11); the wavy plate (30) has a wavy-shaped cross section and comprises a second region (31) and a continuous region (32); the second region (31) is connected to the continuous region (32); the wavy-shaped cross section comprises a plurality of peak portions (30a) and a plurality of valley portions (30b); the second region (31) has a plurality of second holes (31a), and a hole size of each of the second holes (31a) is in a range between substantially 0.8 mm and substantially 5 mm; a ratio of a total area of the first holes (21a) and the second holes (31a) to a total area of the flat plate (20) and the wavy plate (30) is in a range between substantially 35% and substantially 45%; the wavy plate (30) has a solder region (33), the solder region (33) overlaps at least one portion of at least one of the second region (31) and the continuous region (32) so as to form an overlapped portion; solders (T) are on outer sides of the peak portions (30a) and outer sides of the valley portions (30b) which are in the solder region (33); a ratio of an area of the solder region (33) to an area of the wavy plate (30) is in a range between substantially 20% and substantially 66%.

2. The metal honeycomb substrate (100) according to claim 1, wherein the overlapped portion is in the second region (31), and the ratio of the area of the solder region (33) to the area of the wavy plate (30) is in a range between substantially 40% and substantially 66%.

3. The metal honeycomb substrate (100) according to claim 1, wherein the overlapped portion is in the continuous region (32), and the ratio of the area of the solder region (33) to the area of the wavy plate (30) is in a range between substantially 20% and substantially 33%.

4. The metal honeycomb substrate (100) according to claim 1, wherein the overlapped portion is in the second region (31) and the continuous region (32), and the ratio of the area of the solder region (33) to the area of the wavy plate (30) is in a range between substantially 21% and substantially 40%.

5. The metal honeycomb substrate (100) according to claim 1, wherein the continuous region (32) comprises a middle subregion (321), the second region (31) comprises two second subregions (311), the middle subregion (321) is between the two second subregions (311), and the two second subregions (311) and the middle subregion (321) are arranged along a short-axis direction (D2) of the wavy plate (30).

6. The metal honeycomb substrate (100) according to claim 5, wherein a hole size of each of the second holes (31a) in one of the two second subregions (311) is different from a hole size of each of the second holes (31a) in the other second subregion (311).

7. The metal honeycomb substrate (100) according to claim 1, wherein the continuous region (32) comprises two edge subregions (322), and the second region (31) is between the two edge subregions (322).

8. The metal honeycomb substrate (100) according to claim 7, wherein the continuous region (32) comprises a middle subregion (321), and the middle subregion (321) is connected to at least one of the two edge subregions (322).

9. The metal honeycomb substrate (100) according to claim 1, wherein the continuous region (32) comprises a middle subregion (321), the second region (31) comprises two second subregions (311), the middle subregion (321) is between the two second subregions (311), and the two second subregions (311) and the middle subregion (321) are arranged along a long-axis direction (D1) of the wavy plate (30).

10. The metal honeycomb substrate (100) according to claim 9, wherein the continuous region (32) further comprises two edge subregions (322), and the two edge subregions (322) are at two sides of the second region (31) along the long-axis direction (D1) of the wavy plate (30).

11. The metal honeycomb substrate (100) according to claim 1, wherein the solder region (33) is not located in a portion of the spiral structure (S) substantially within between 7.9 mm and 18.9 mm of an inner side of the spiral structure (S) along a radial direction of the spiral structure (S).

12. The metal honeycomb substrate (100) according to claim 1, further comprising an immersion region (40), wherein the immersion region (40) is at a gas-inlet end of the spiral structure (S).

13. The metal honeycomb substrate according to claim 12, wherein the overlapped portion is in the second region (31) and the continuous region (32), and the ratio of the area of the solder region (33) to the area of the wavy plate (30) is in a range between substantially 21% and substantially 40%; the continuous region (32) comprises a middle subregion (321), the second region (31) comprises two second subregions (311), the middle subregion (321) is between the two second subregions (311), and the two second subregions (311) and the middle subregion (321) are arranged along a short-axis direction (D2) of the wavy plate (30); the continuous region (32) comprises two edge subregions (322), and the second region (31) is between the two edge subregions (322); the middle subregion (321) is connected to at least one of the two edge subregions (322); a hole size of each of the second holes (31a) in one of the two second subregions (311) is different from a hole size of each of the second holes (31a) in the other second subregions (311).

14. A metal honeycomb substrate (100) comprising:
a tubular body (10) having a receiving portion (11);
a flat plate (20) having a first region (21), wherein the first region (21) has a plurality of first holes, and a hole size of each of the first holes (31a) is in a range between substantially 0.8 mm and substantially 5 mm; and
a wavy plate (30) stacked with the flat plate (20) to form a spiral structure (S), wherein the spiral structure (S) is received in the receiving portion (11); the wavy plate (30) comprises a second region (31); the second region (31) has a plurality of second holes (31a), and a hole size of each of the second holes (31a) is in a range between substantially 0.8 mm and substantially 5 mm;
wherein the spiral structure (S) has a spiral center (S1) and a central portion (S2, S2'), a first cycle of the spiral structure (S) radially and outwardly extends from the spiral center (S1) to form a spiral central hole (S0), the central portion (S2, S2') is within the spiral central hole (S0), and the first cycle is a portion of the flat plate (20).

15. The metal honeycomb substrate (100) according to claim 14, wherein a diameter of the spiral central hole (S0) is in a range between substantially 2.5 mm and substantially 6.0 mm.

16. The metal honeycomb substrate (100) according to claim 14, wherein one end (S23, S23') of the central portion (S2, S2') is connected to the first cycle, and the other end (S24, S24') of the central portion (S2, S2') is adjacent to an inner wall (S01) of the spiral central hole (S0).

17. The metal honeycomb substrate (100) according to claim 16, wherein the other end (S24, S24') of the central portion (S2, S2') has a folded portion (S25, S25').

18. The metal honeycomb substrate (100) according to claim 14, wherein a second cycle and a third cycle of the spiral structure (S) radially and outwardly extend from the spiral center (S1), and the second cycle and the third cycle are portions of the flat plate (20).

19. The metal honeycomb substrate (100) according to claim 18, wherein a diameter of the spiral central hole (S0) is in a range between substantially 2.5 mm and substantially 6.0 mm; one end (S23, S23') of the central portion (S2, S2') is connected to the first cycle, and the other end (S24) of the central portion (S2, S2') is adjacent to an inner wall (S01) of the spiral central hole (S0); the other end (S24, S24') of the central portion (S2, S2') has a folded portion (S25, S25').

20. A spiral structure (S) for metal honeycomb substrate (100), wherein the spiral structure (S) comprises:
a flat plate (20) having a first region (21), wherein the first region (21) has a plurality of first holes (21a), and a hole size of each of the first holes (21a) is in a range between substantially 0.8 mm and substantially 5 mm; and
a wavy plate (30) stacked with the flat plate (20) to form the spiral structure (S), wherein the wavy plate (30) comprises a second region (31); the second region (31) has a plurality of second holes (31a), and a hole size of each of the second holes (31a) is in a range between substantially 0.8 mm and substantially 5 mm;
wherein the spiral structure (S) has a spiral center (S1) and a central portion (S2, S2'), a first cycle of the spiral structure (S) radially and outwardly extends from the spiral center (S1) to form a spiral central hole (S0), the central portion (S2, S2') is within the spiral central hole (S0), and the first cycle is a portion of the flat plate (20).
